# EUROPÄISCHE PATENTSCHRIFT

(11) **EP 1 880 972 B1**
(45) Veröffentlichungstag und Bekanntmachung des Hinweises auf die Patenterteilung: **07.10.2009**
(21) Anmeldenummer: 07011083.8
(22) Anmeldetag: 06.06.2007
(51) Int. Cl.: B66F 9/06, H01M 2/10, H01M 10/06

(54) **Batterieblock für ein Flurförderzeug**
Battery block for an industrial truck
Bloc de batterie pour un chariot de manutention

(30) Priorität: 30.06.2006 DE 102006030770
(43) Veröffentlichungstag der Anmeldung: 23.01.2008
(73) Patentinhaber: Jungheinrich Aktiengesellschaft, 22047 Hamburg (DE)
(72) Erfinder: Mielke, Thomas, Dr.-Ing., 22397 Hamburg (DE)
(74) Vertreter: Hauck Patent- und Rechtsanwälte

(56) Entgegenhaltungen:
- DE-A1- 19 505 456
- DE-A1- 19 700 272
- US-A1- 2003 003 350

## Beschreibung

Die Erfindung bezieht sich auf einen Batterieblock für ein Flurförderzeug nach dem Oberbegriff des Patentanspruchs 1.

Der Batterieblock von batteriebetriebenen Flurförderzeugen ist an geeigneter Stelle am Flurförderzeug angeordnet. Er weist einen zumeist länglichen Batterietrog auf, der eine Mehrzahl von Zellen aufnimmt, wobei die Größe des Trogs bzw. die Anzahl der Zellen von der benötigten zur Verfügung zu stellenden Energiemenge bzw. von dem Zeitraum abhängt, innerhalb dessen Energie zur Verfügung stehen muß. Bei sogenannten Schubmaststaplern ist der Batterietrog zwischen der Kabine und dem Schubmast angeordnet. Bei Drei- oder Vierrad-Gegengewichtsstaplern ist der Batterieblock zwischen den Achsen angeordnet. In diesem Fall dient der Batterieblock auch als Gegengewicht zusammen mit einem am Heck des Fahrzeugs angeordneten Gewicht.

Leere Batterien müssen naturgemäß wieder aufgeladen werden. Dies geschieht durch Herausnehmen des Batterietrogs und Transport zu einer Ladestation, während das Flurförderzeug mit einer frisch aufgeladenen Batterie bestückt wird. Dieses Verfahren ist relativ aufwendig. Aus DE 102 41 083 A1 ist ein Batterieblock bekannt geworden, bei dem ein Batterietrog eine Vielzahl von Batteriezellen aufnimmt sowie ein Ladegerät. Mithilfe des bordeigenen Ladegeräts entfällt die Notwendigkeit eines Batteriewechsels zu Aufladezwecken. Sogenannte On-board-Lader sind jedoch bei Schubmaststaplern und Drei- oder Vierradstaplern bisher nicht bekannt, da kein ausreichender Platz im Fahrzeug hierfür vorhanden ist.

Aus DE 195 05 456 A1 ist ein Batterieblock für deichselgelenkte Flurförderzeuge bekannt geworden, der mindestens zwei Abschnitte mit unterschiedlichen Abmessungen in Fahrzeuglängsrichtung aufweist, wobei der im wesentlichen antriebsseitige Abschnitt des Batterieblocks in Fahrzeuglängsrichtung ein geringeres Maß aufweist als der im wesentlichen auf der anderen Seite der Längsmittelebene des Flurförderzeugs befindliche Abschnitt des Batterieblocks. Die Haupterstreckungsrichtung des bekannten Batterieblocks ist quer zur Längsachse des Flurförderzeugs.

Der Erfindung liegt die Aufgabe zugrunde, einen Batterieblock für ein Flurförderzeug, insbesondere für einen Schubmaststapler oder einen Drei- oder Vierradgegengewichtsstapler, zu schaffen, der Platz läßt für ein Ladegerät.

Diese Aufgabe wird durch die Merkmale des Patentanspruchs 1 gelöst.

Bei dem erfindungsgemäßen Batterieblock für Flurförderzeuge ist der Batterietrog in U-Form ausgebildet, und ein Gehäuse für ein Ladegerät ist zwischen den Schenkeln des U-förmigen Batterietroges angeordnet.

Vorzugsweise ist der Raum zwischen den Schenkeln und dem Gehäuse so geformt, dass es annähernd passend zwischen den Schenkeln und dem Steg des Batterietrogs aufgenommen ist. Nach einer Ausgestaltung der Erfindung kann das Ladegerät mit dem Batterietrog lösbar verbindbar sein, um mit diesem eine Einheit zu bilden. Damit kann Batterietrog mit dem Ladegerät zusammen in das Flurförderzeug eingesetzt bzw. aus diesem entnommen werden.

Die U-Form des Batterieblocks ermöglicht eine symmetrische Anordnung und damit ein gleich verteiltes Gewicht im Flurförderzeug, was der Kippsicherheit entgegenkommt. Die Form des Batterieblocks ermöglicht die Anordnung eines Ladegeräts an Bord des Flurförderzeugs, wobei - wie erwähnt - Ladegerät und Batterie eine feste Einheit bilden können. Die Außenkontur von Batterietrog und Ladegerät kann mit der Kontur herkömmlicher Batterieräume im Flurförderzeug übereinstimmen, sodass auch bereits gefertigte Geräte mit der erfindungsgemäßen Einheit ausgestattet werden können. Der vom Ladegerät eingenommene Raum reduziert Batteriekapazität. Dieser Wegfall kann zumindest teilweise dadurch kompensiert werden, dass Batteriezellen größerer Höhe verwendet werden. Standardhöhe haben Zellen der genormte Baureihe PzS. Es existieren jedoch auch höhere Batteriezellen der Baureihe PzB. Diese können in vorteilhafter Weise eingesetzt werden. Außerdem ist es durch den Einsatz eines bordeigenen Ladegeräts möglich, die Batterie in schnellerem Wechsel durch eine Zwischen- oder Komplettladung zu laden, sofern ein Stromnetz zur Verfügung steht.

Bei herkömmlichen Flurförderzeugen dient die Batterie auch als Teil des Gegengewichts. Die erfindungsgemäße Ausbildung des Batterieblocks reduziert naturgemäß sein Gesamtgewicht. Daher kann nach einer Ausgestaltung der Erfindung vorgesehen werden, in die Schenkel des U-förmigen Batterietrogs jeweils ein Gewicht aufzunehmen.

Nach einer weiteren Ausgestaltung der Erfindung ist vorgesehen, dass der Batterietrog mit wärmeableitenden Mitteln versehen ist. Diese wärmeableitenden Mittel können insbesondere im Bereich des Ladegeräts vorgesehen werden, in dem der Batterietrog beispielsweise als Kühler fungiert.

Die Erfindung soll nachfolgend anhand eines in einer Zeichnung dargestellten Ausführungsbeispiels näher erläutert werden.

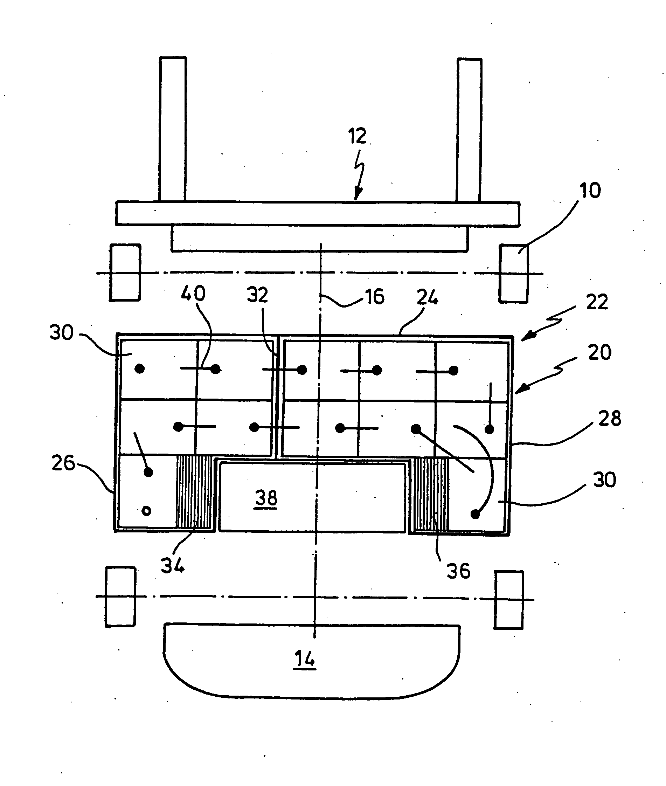

Die einzige Figur zeigt die Draufsicht auf einen Batterieblock nach der Erfindung.

In der Figur ist in Draufsicht ein Flurförderzeug angedeutet in Form eines Gegengewichtstaplers, wobei die vier Räder 10 ein Vierradfahrwerks andeuten; ferner sind ein Hubgerüst 12 sowie ein Gegengewicht 14 am Heck auf der dem Hubgerüst 12 entgegengesetzten Ende des Flurförderzeugs angedeutet. Die Längsachse des Flurförderzeugs ist mit 16 bezeichnet.

Zwischen den Radachsen ist symmetrisch zur Achse 16 ein Batterieblock 20 angeordnet zum Antrieb des Flurförderzeugs über einen Antriebsmotor, der jedoch nicht gezeigt ist. Der Batterieblock 20 wird in geeigneter Weise in einem Batterieraum des Flurförderzeugs untergebracht und vorzugsweise von der Seite angeschoben. Dies ist jedoch nicht gezeigt und an sich bekannt.

Wie erkennbar, weist der Batterieblock 20 einen U-förmigen Batterietrog 22 auf, mit einem Steg 24 und Schenkeln 26, 28. Steg 22 und Schenkel 26, 28 bilden einen zusammenhängenden Aufnahmeraum für eine Mehrzahl von Zellen 30. Im Stegraum 22 sind 10 Zellen 30 und in den Schenkeln 26, 28 jeweils eine Zelle 30 untergebracht. Der Stegraum ist durch eine Querwand 32 versteift. Die Schenkelräume 26, 28 sind etwas größer ausgelegt als die Breite der jeweils aufgenommenen Zelle 30. In dem freibleibenden Raum ist jeweils ein Gewicht 34 bzw. 36 untergebracht.

Der zwischen den Schenkeln 26, 28 und der zugewandten Stegseite verbleibende Raum wird durch ein Gehäuse 38 ausgefüllt, das ein Ladegerät aufnimmt. Das Gehäuse hat vorzugsweise die Höhe des Batterietrogs 22, welche so bemessen ist, dass die Zellen 30 in der Höhe einen umlaufenden Rand des Batterietrogs 22 freilassen, wie an sich bekannt.

Durch einzelne elektrische Verbindungen 40 sind alle Zellen 30 in Reihe geschaltet. Ihre Höhe entspricht vorzugsweise der Baureihe PzB, welche bekanntlich höhere Zellen aufweist als die Zellen nach PzS, welche nach DIN ausgeführt sind.

Um eine Wärmeabfuhr vom Ladegerät 38 zu ermöglichen, kann zwischen den Wänden des Gehäuses 38 und den zugekehrten Wänden des Batterietrogs 22 ein Spalt vorgesehen werden, über den ein Luftaustausch zur Abfuhr von Wärme ermöglicht wird. Alternativ ist auch möglich, den Batterietrog selbst als Kühler zu verwenden. In diesem Fall liegen die Wände des Ladegeräts unmittelbar an den zugeordneten Wänden des Batterietrogs 22 an und der Batterietrog weist Kühlrippen oder andere Mittel auf zur Abfuhr der im Ladegerät entstehenden Wärme.

## Patentansprüche

1. Batterieblock für ein Flurförderzeug mit einem länglichen Batterietrog zur Aufnahme einer Mehrzahl von Batteriezellen, dessen Längserstreckung quer zur Längsachse des Flurförderzeugs verläuft, **dadurch gekennzeichnet, dass** der Batterietrog (22) U-Form aufweist und ein Gehäuse (38) für ein Ladegerät zwischen den Schenkeln (26, 28) des U-förmigen Batterietrogs (22) angeordnet ist.

2. Batterieblock nach Anspruch 1, **dadurch gekennzeichnet, dass** die Länge der Schenkel (26, 28) etwa der Länge oder Breite einer Batteriezelle entspricht.

3. Batterieblock nach Anspruch 1 oder 2, **dadurch gekennzeichnet, dass** der Stegraum des Batterietrogs (22) die zweifache Breite der Batteriezellen aufweist.

4. Batterieblock nach einem der Ansprüche 1 bis 3, **dadurch gekennzeichnet, dass** der Stegraum des Batterietrogs (22) durch eine Querwand (32) versteift ist.

5. Batterieblock nach einem der Ansprüche 1 bis 4, **dadurch gekennzeichnet, dass** die Schenkelräume des Batterietrogs (22) Platz für eine Batteriezelle (30) und ein Gewicht (34, 36) aufweisen.

6. Batterieblock nach einem der Ansprüche 1 bis 5, **dadurch gekennzeichnet, dass** die Batteriezellen (30) in der Höhe größer sind als PzS-Zellen.

7. Batterieblock nach einem der Ansprüche 1 bis 6, **dadurch gekennzeichnet, dass** der Batterietrog (22) mit wärmeableitenden Mitteln versehen ist.

8. Batterieblock nach einem der Ansprüche 1 bis 7, **dadurch gekennzeichnet, dass** das Gehäuse (38) des Ladegeräts mit dem Batterietrog (22) lösbar verbindbar ist und mit diesem eine Einheit bildet.

9. Batterieblock nach einem der Ansprüche 1 bis 8, **dadurch gekennzeichnet, dass** das Gehäuse (38) des Ladegeräts annähernd passend zwischen den Schenkeln (26, 28) des Batterietrogs (22) aufgenommen ist.

## Claims

1. Battery pack for an industrial truck with an elongate battery box for accommodating a plurality of battery cells, the longitudinal extension thereof extending transversely to the longitudinal axis of the industrial truck, **characterized in that** the battery box (22) has a U-shape and a housing (38) for a charging unit is arranged between the arms (26, 28) of the U-shaped battery box (22).

2. Battery pack according to Claim 1, **characterized in that** the length of the arms (26, 28) approximately corresponds to the length or width of a battery cell.

3. Battery pack according to Claim 1 or 2, **characterized in that** the crosspiece space of the battery box (22) is twice the width of the battery cells.

4. Battery pack according to one of Claims 1 to 3, **characterized in that** the crosspiece space of the battery box (22) is reinforced by a transverse wall (32).

5. Battery pack according to one of Claims 1 to 4, **characterized in that** the spaces between the arms of the battery box (22) have space for a battery cell (30) and for a weight (34, 36).

6. Battery pack according to one of Claims 1 to 5, **characterized in that** the battery cells (30) are greater in height than PzS cells.

7. Battery pack according to one of Claims 1 to 6, **characterized in that** the battery box (22) is provided with heat dissipation means.

8. Battery pack according to one of Claims 1 to 7, **characterized in that** the housing (38) of the charging unit may be releasably connected to the battery box (22) and forms a unit therewith.

9. Battery pack according to one of Claims 1 to 8, **characterized in that** the housing (38) of the charging unit is accommodated in a manner which fits approximately between the arms (26, 28) of the battery box (22).

## Revendications

1. Bloc de batterie pour un chariot de manutention avec un coffre à batterie allongé pour recevoir une pluralité d'éléments de batterie, l'étendue longitudinale de celui-ci s'étendant transversalement à l'axe longitudinal du chariot de manutention, **caractérisé en ce que** le coffre à batterie (2) présente une forme en U et un boîtier (38) pour un chargeur est disposé entre les branches (26, 28) du coffre à batterie (22) en forme de U.

2. Bloc de batterie selon la revendication 1, **caractérisé en ce que** la longueur des branches (26, 28) correspond approximativement à la longueur ou la largeur d'un élément de batterie.

3. Bloc de batterie selon la revendication 1 ou 2, **caractérisé en ce que** l'espace médian du coffre à batterie (22) présente deux fois la largeur des éléments de batterie.

4. Bloc de batterie selon l'une des revendications 1 à 3, **caractérisé en ce que** l'espace médian du coffre à batterie (22) est rigidifié par une paroi transversale (32).

5. Bloc de batterie selon l'une des revendications 1 à 4, **caractérisé en ce que** les espaces de branche du coffre à batterie (22) présentent de la place pour un élément de batterie (30) et un poids (34, 36).

6. Bloc de batterie selon l'une des revendications 1 à 5, **caractérisé en ce que** les éléments de batterie (30) ont une hauteur supérieure à des éléments PzS.

7. Bloc de batterie selon l'une des revendications 1 à 6, **caractérisé en ce que** le coffre à batterie (22) est pourvu de moyens de dissipation de la chaleur.

8. Bloc de batterie selon l'une des revendications 1 à 7, **caractérisé en ce que** le boîtier (38) du chargeur peut être raccordé au coffre à batterie (22) de manière détachable et forme avec celui-ci une unité.

9. Bloc de batterie selon l'une des revendications 1 à 8, **caractérisé en ce que** le boîtier (38) du chargeur est reçu de manière approximativement ajustée entre les branches (26, 28) du coffre à batterie (22).
